Europäisches Patentamt

European Patent Office  (11) Publication number: **0 183 324**

Office européen des brevets  **A2**

(12)  **EUROPEAN PATENT APPLICATION**

(21) Application number: **85201948.8**  (51) Int. Cl.⁴: **B29D 11/00**

(22) Date of filing: **25.11.85**

(30) Priority: **28.11.84 IT 2376684**

(43) Date of publication of application:
**04.06.86 Bulletin 86/23**

(84) Designated Contracting States:
**BE DE FR GB LU NL**

(71) Applicant: **I.O.R. INDUSTRIE OTTICHE RIUNITE S.p.A.**
**via F.lli Bandiera 9**
**I-30175 Venezia-Marghera(IT)**

(72) Inventor: **Favero, Santino**
**Via Sebastiano Caboto 34**
**I-35100 Padova(IT)**

(74) Representative: **Henke, Erwin et al**
**Ing.Barzanò & Zanardo Milano S.p.A. Via Borgonuovo, 10**
**I-20121 Milano(IT)**

(54) **Plant for the automatic production of organic lenses.**

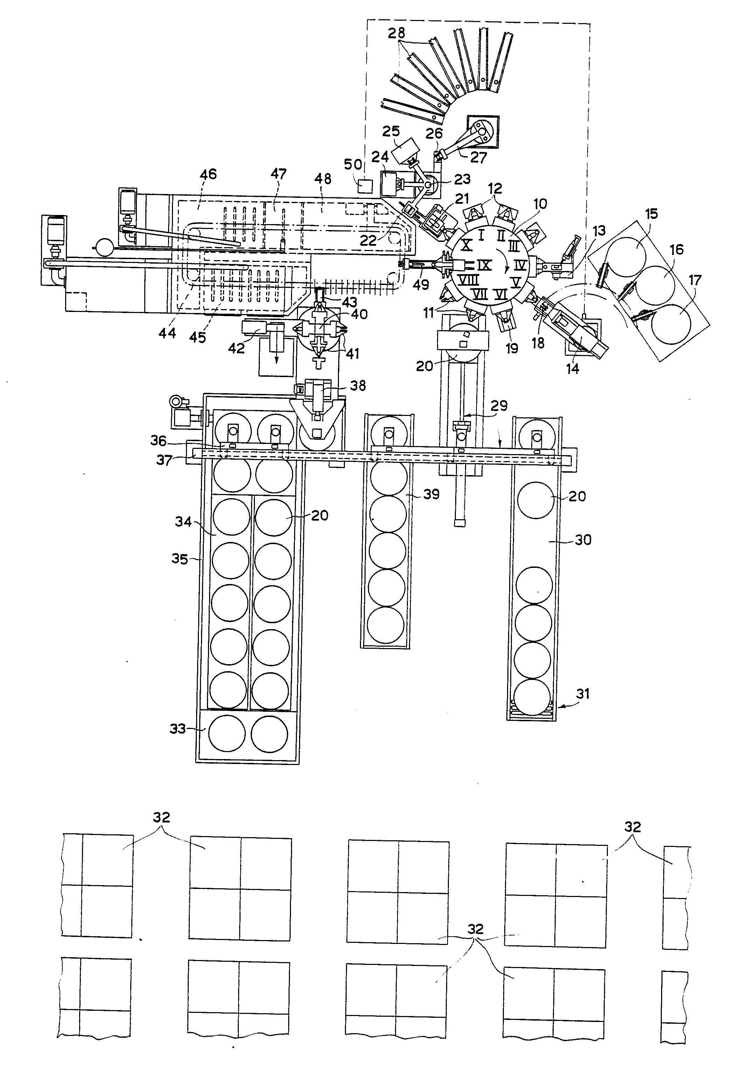

(57) A plant is proposed for the production of organic lenses inside moulds constituted by pairs of matching half-moulds kept spaced apart and linked with each other by annular links of plastic material,inside whose cavity a suitable plastic material, to be made polymerize before the drawing of the lenses, is intended to be introduced. After having been started and put under steady state running conditions, the plant carries out automatically the following operations: assembling of the moulds with selected links; control of the centering of the two mould component parts; delivery of the assembled moulds to a filling machine, into a polymerization tank and into maintenance tanks; removal of the links by tearing up from the moulds; transfer of the link-free moulds, with the lenses formed inside them, into washing tanks; drawing of the lenses; delivery of the lenses to an optical check station, and discharging of the finished lenses; recycling of the half-mould pairs. From the optical check of the formed lenses a command is emitted for the selection of the links to be assembled with the respective half-mould pairs. A closed-loop conveyor with sucker holding elements, intermittently running, brings the moulds to successive operating stations. Between the drawing station and the stations for the assemblage of the half-mould pairs with the respective links, intermediate stations are provided for the loading and the possible replacement of half-mould pairs.

The present invention relates to a plant for the automatic production of organic lenses.

It is known that the lenses are manufactured inside moulds which are constituted each one by a pair of glass lens-like shaped half-moulds, which half-moulds are suitably spaced apart from each other and peripherally linked with each other by elastic annular links, generally of plastic material, to define a cavity inside which a suitable plastic material is charged, intended to be made polymerize to form the organic lens. After a suitable polymerization time at preestablished temperature, and ageing at controlled temperature, the so-formed organic lenses are drawn from the moulds and the pairs of half-moulds, suitably cleaned, are recycled for the production of other lenses.

So far, all these operations of mould assemblage, of transfer of the assembled moulds to the mould filling machine and then into the polymerization and maintenance tanks, and of drawing of the formed lenses were carried out manually, with a great deal of manpower and time.

The reasons why such operations were regarded as difficultly automatable are many. First of all, one should keep in his mind that the configuration of the optical lenses may vary within wide ranges, so that each lens type requires a particular type of mould constituted by two half-moulds, and by the peripheral ring link. An automatic plant must be hence very flexible and allow a fast and easy adaptation to the variable production requirements. An extremely precise assemblage of the mould is then necessary, as for the radial and spatial centering of the two half-moulds moulds, as for the centering of the ring link relatively to the half-moulds. A further not negligible difficulty relates to the handling of the moulds, if one considers that the two half-moulds are themselves constituted by lenses of glass prepared with high precision characteristics, and hence expensive, so that any possible breaking of a half-mould causes a not negligible damage.

Purpose of the present invention is hence in general the overcoming of these difficulties, and the providing of a plant suitable to allow an automatic production of organic lenses, which may give a wide guarantee of a delicate handling of the moulds, showing a high precision in the mould assemblage, and of high flexibility, to allow the production on selection of batches of organic optical lenses having different optical characteristics, without that submitting the lenses produced to subsequent machining stages be necessary.

To that purpose, according to the invention a plant is proposed for the automatic production of organic lenses in moulds constituted by pairs of half-moulds spaced apart from each other and linked with each other by elastic peripheral annular links, within whose cavity a plastic material is intended to be introduced to be made polymerize before the drawing of the lenses, said plant being characterized in that it comprises: a closed-loop conveyor with equidistant gripping and holding sucker elements for a plurality of half-mould pairs, controlled to intermittently move to the purpose of bringing said half-mould pairs successively to a plurality of operational stations, in particular at least to some stations for the loading of half-mould pairs on said conveyor's gripping and holding elements, to a station for the centering of the half-moulds of each pair, to a station for the assemblage and the centering of a selected link on each pair of half-moulds, to a station for the discharging of the assembled moulds from the conveyor's gripping and holding elements, and of reloading of the same on to the same gripping and holding elements of the moulds stripped of the respective links with the formed lenses and to a station for the drawing of the lenses formed; a manipulator for the selected drawing of the links from one of a plurality of feeders, and for the transfer thereof to said assemblage station; a device for the loading of the moulds into transport baskets and a device for the unloading of the moulds from the baskets; means for the conveyance of the baskets from said unlodaing device to said loading device; a device for the transfer of the moulds containing the polymerized lenses from said discharging device, first on to a device for tearing up the links and then on to a device for the transfer thereof on to a washing carousel; a device for transferring the moulds from said washing carousel into said reloading station; a device for collecting said lenses in said drawing station, and for the transfer thereof to an optical check device; means for the unloading of the finished lenses; and means associated to said optical check device to emit, according to the checked lenses, a selection signal to said link drawing and transfer manipulator.

The plant may also suitably comprise means for the transfer of the baskets filled with assembled moulds to a station, wherein piles of baskets are formed, intended to be transferred in succession on to an additional machine for the filling of the moulds, into polymerization tanks, and into maintenance tanks. The piles are then undone to single baskets, which are sent to the device for the unloading of the moulds from the baskets.

Once under steady state running conditions, i.e., when the first pair of half-moulds loaded on to the closed-loop conveyor returns to the first loading station after the lens drawing, the plant operates in a completely automatic mode, carrying out the operations of mould assemblage, of centering control, of basket loading, of mould unloading from the baskets coming from the maintenance tank, of link tearing up, of transfer into the washing tanks, of lens drawing, of optical check and of unloading of the finished lenses. The so-structured plant is capable of automatically producing a plurality of types of organic lenses, and that as a function of the number of link feeders available in the same plant, corresponding to the different types of half-mould pairs loaded. The work is normally so prearranged, that various batches of lenses of type equal, but different from batch to batch are produced. Without any intervention from the outside, the plant produces hence cyclically batches of lenses of the same type.

To vary the produced lens type, replacing the related pairs of half-moulds and the correspondet links is necessary. It is to that purpose that along the closed-loop conveyor's course, between the lens drawing station and the station for the centering of the half-moulds of each pair, some stations are provided for the loading and the replacement of the half-mould pairs on the conveyor's gripping and holding elements. This half-mould pair replacement, and of course the replacement also of the respective links in the respective feeder can thus occur without interrupting the continuous plant production.

The invention is disclosed hereunder in greater detail with reference to the attached drawing, whose single figure shows a plan outline of an embodiment of the plant.

In the exemplifying embodiment as shown, the plant comprises as the closed-loop conveyor a rotary table 10 controlled to effect intermittent angular strokes of 36° each, so as to make a complete revolution over ten successive steps. On its periphery, the rotary table 10 bears in ten equidistant positions gripping and holding sucker elements 11 suitable to grip and hold half-mould pairs.

Around the rotary table 10 ten operational stations are installed, indicated with the Roman numbers from I to X.

With the intermittent revolving of the rotary table 10, each one of its elements 11 is hence successively brought in to the stations from I to X.

The stations I, II and III serve to the loading and/or the either manual or automatic replacement of half-mould pairs on the gripping and holding sucker elements 11 of the rotary table 10. Moreover, in these stations gas blowing and intake devices 12 are predisposed for the cleaning of the half-mould pairs to be used again.

In the station IV a device 13 is provided for the radial and spatial centering of the two half-moulds of each pair, in order to guarantee the exact mutual positioning thereof.

In the station V, the assemblage and the centering takes place of an annular link on each half-mould pair, said link being selected so as to correspond to the mould to be assembled. A motor-driven manipulator 14 is suitable to draw on command the selected link from one of three feeders 15, 16, 17, containing links of types different from one another, and to transfer the selected link to the station V, wherein a device 18 for the assemblage and the centering of the link relatively to a respective half-mould pair is provided.

In the station VI a unit 19 is provided for the check of the link/half-mould pair assemblage.

In the station VII the transfer takes place of the assembled moulds from the elements 11 of the rotary table 10 to transport baskets 20. To that purpose, in the station VII a device is provided for the loading of the baskets 20, which are provided with a consistent number of grip pincers (not shown), uniformly distributed over their periphery. To each basket 20 to be loaded present at the station VII angular strokes are imposed in synchronism with the intermittent strokes of the rotary table 10, to present each time in front of a gripping element 11 of the rotary table 10 a grip pincers suitable to receive an assembled mould.

In the station VIII the cleaning takes place of the gripping and holding sucker elements 11 of the rotary table 10. In the station IX, the moulds containing the lenses formed are reloaded on to the elements 11 of the rotary table 10, and in the station X a drawing device 21 is provided, suitable to draw the lenses, leaving the half-mould pairs retained by the elements 11 of the table 10. The drawn lenses are discharged into a collection and transport device 22.

A three-arm manipulator 23 is suitable to draw the lenses from the device 22 and to bring them in succession to a frontifocimeter 24, to a light control device 25 and to a station 26, wherein the lenses are drawn by a manipulator 27 which sorts them out to various conveyor tapes 28 according to the type of the lens, and to the precision degree detected by the check devices 24 and 25.

It should be noted that with the frontifocimeter 24 means are associated as schematically indicated by the block 50, suitable to emit a signal different according to the type of lense detected, this signal being used to prearrange the control of the manipulator 14 so that the same may select the type of link suitable, among those available in the feeders from 15 to 17, to the half-mould pair which was previously used for the production of the lens checked by the frontifocimeter 24. In such a way, when the related half-mould pair returns in front of the station V, to it the corresponding right annular link is automatically supplied.

The baskets 20 loaded in the station VII with the assembled moulds are transferred by means of a transport device 29 on a conveyor belt 30, which conveys them to a station 31, in which basket piles are formed, to be then transferred first to an additional machine (not shown), which fills the moulds with a suitable plastic material, then in to polymerization tanks 32 inside which they remain over the time required for the polymerization of the plastic material, and finally into a mainenance tank 33, wherein the piles of baskets with the moulds filled with polymerized plastic material are kept at a constant temperature of about 70°C.

The basket piles are then undone, and the individual baskets are placed on a conveyor 34 running inside a maintenance tank 35 kept at a constant temperature of 70°C.

At the end of the conveyor 34, the baskets 20 are hooked up on to a transport slide 36 running along a guide 37, to be transported to a device 38 which unloads the moulds individually from the baskets. To that purpose, the basket to be unloaded is made rotate in an intermittent fashion to present the moulds, one by one, in front of the unloading device 38 substantially consisting of a swingin arm. The baskets unloaded and empty are conveyed to a buffer 39, and from this they are recycled towards the loading device in the station VII.

The individual moulds unloaded by means of the device 38 are transferred from this latter to a four-station rotary table 40 provided with four peripheral gripping elements 41, to be transported first to a device 42 which removes the annular link by tearing it up from each mould, and then to a device 43, which inserts the moulds stripped of their links and containing the formed lenses on to a washing carousel 44.

This carousel 44 transports the moulds with the lenses first through a tank 45 for their washing with a suitable detergent, then through tanks 46, 47 for water washing, and finally through a tank 48 wherein they undergo a hot-air drying.

At the end of this course, the moulds with the formed lenses, duly washed and dried, arrive to a device 49 in the station IX, which unloads them from the carousel 44 and reloads them on to the gripping elements 11 of the rotary table 10.

The cycle is so closed and the moulds, i.e., the half-mould pairs, after the drawing of the formed lenses in the station X, are used again for the subsequent production cycle, unless they are replaced in the stations from I to III.

From what has been hereinabove disclosed, it is clear how the plant, after that it has reached its steady-state operating conditions, automatically produces organic lenses, which in the example as considered can be of three different types, by three feeders of different link types being available. Of course, according to the production needs, providing more or less link feeders is possible.

If the manufactured lens type is to be changed, this can be achieved without interrupting the plant's continuous production, by replacing the half-mould pairs in the loading stations I-III, and the related links in the corresponding feeder.

Thanks to the various devices for the centering of the mould component parts, the plant guarantees a high production precision, and the means intended to handle the half-mould pairs are so structured, as to allow a reliable and at the same time delicate handling, so avoiding the half-moulds to be broken.

## Claims

1. Plant for the automatic production of organic lenses in moulds constituted by pairs of half-moulds spaced apart from each other and linked with each other by elastic peripheral annular links, within whose cavity a plastic material is intended to be introduced, to be made polymerize before the drawing of the lenses, said plant being characterized in that it comprises: a closed-loop conveyor with equidistant gripping and holding sucker elements for a plurality of half-mould pairs, controlled to intermittently move to bring said half-mould pairs successively to a plurality of operational stations, in particular at least to some stations for the loading of half-mould pairs on said conveyor's gripping and holding elements, to a station for centering the half-moulds of each pair, to a station for the assemblage and the centering of a selected link on each pair of half-moulds, to a station for discharging the assembled moulds from the conveyor's gripping and holding elements, and of reloading on the same conveyor' gripping and holding elements of the moulds stripped of the respective links with the formed lenses and to a station for the drawing of the lenses formed; a manipulator for the selected drawing of the links from one of a plurality of feeders, and for the transfer thereof to said assemblage station; a device for the loading of the moulds into transport baskets, and device for the unloading of the moulds from the baskets; means for the conveyance of the baskets from said unloading device to said loading device; a device for the transfer of the moulds containing the polymerized lenses from said discharging device, first on to a device for the tearing up of the links, and then on to a device for the transfer thereof on to a washing carousel; a device for the transfer of the moulds from said washing carousel into said reloading station; a device for the collection of said lenses in said drawing station, and for the transfer of the lenses to an optical check device; means for the unloading of the finished lenses; and means associated to said optical check device to emit, according to the checked lens, a selection signal to said link drawing and transfer manipulator.

2. Plant according to claim 1, characterized in that means are provided for the transfer of the baskets loaded with assembled moulds into a station for the formation of piles of loaded baskets, as well as means for undoing said piles into individual baskets to be sent to said device for the mould unloading from the baskets.

3. Plant according to claim 1, characterized in that the baskets unloaded by means of the said mould unloading device are introduced into a reserve buffer before being returned to the mould loading device.

4. Plant according to claim 1, characterized in that in the half-mould pair loading stations devices are installed for the cleaning of the same half-mould pairs.

5. Plant according to claim 1, characterized in that the unloading of the assembled moulds from the conveyor's gripping and holding elements, and the reloading on to said elements of the moulds stripped of the respective links with the formed lenses are carried out in separate stations.

6. Plant according to claim 5, characterized in that between the assembled mould unloading station and the station for the reloading of the moulds stripped of the respective links a station is provided for the cleaning of the conveyor's gripping and handling elements.

7. Plant according to claim 1, characterized in that in said station for the centering of the half-moulds of each pair a device is provided for the radial and spatial centering.

8. Plant according to claim 1, characterized in that between the station for the assemblage and the centering of the link on each half-mould pair, and the station for the unloading of the assembled moulds a station is provided for the control of the assemblage.

9. Plant according to claim 1, characterized in that said closed-loop conveyor is constituted by a rotary table and that operational stations are installed around said table.